# EUROPÄISCHE PATENTSCHRIFT

(11) **EP 3 136 867 B1**
(45) Veröffentlichungstag und Bekanntmachung des Hinweises auf die Patenterteilung: **09.12.2020**
(21) Anmeldenummer: 15716711.5
(22) Anmeldetag: 28.01.2015
(51) Int. Cl.: A21C 9/08, A21C 11/10, A21C 3/10

(54) **VERFAHREN UND VORRICHTUNG ZUR ERZEUGUNG VON ZUSCHNITTEN VON TEIGSTÜCKEN AUS EINER ODER MEHREREN TEIGBAHNEN**
METHOD AND DEVICE FOR CREATING BLANKS FROM PIECES OF DOUGH FROM ONE OR MORE WEBS OF DOUGH
PROCÉDÉ ET DISPOSITIF POUR PRODUIRE DES DÉCOUPES DE PÂTES À PARTIR D'UNE OU DE PLUSIEURS BANDES DE PÂTES

(30) Priorität: 28.04.2014 DE 102014005998
(43) Veröffentlichungstag der Anmeldung: 08.03.2017
(73) Patentinhaber: Fritsch Bakery Technologies GmbH & Co. KG, 97348 Markt Einersheim (DE)
(72) Erfinder: BERNHARDT, Udo, 97346 Iphofen (DE); WAGNER, Rainer, 97340 Martinsheim (DE)
(74) Vertreter: Grünecker Patent- und Rechtsanwälte PartG mbB
(86) Internationale Anmeldenummer: PCT/DE2015/000025
(87) Internationale Veröffentlichungsnummer: WO 2015/165429

(56) Entgegenhaltungen:
- EP-A1- 0 569 103
- EP-A2- 2 172 109
- EP-B1- 0 482 917
- NL-A- 7 304 519

## Beschreibung

Die Erfindung betrifft zunächst eine Vorrichtung zur Erzeugung von Zuschnitten von insbesondere dreieckigen Teigstücken aus wenigstens einer Teigbahn mit den weiteren Merkmalen des Oberbegriffes des Anspruches 1.

Eine derartige Vorrichtung ist beispielsweise aus EP 0 482 917 B1 bekannt. Bei dieser Vorrichtung erfolgt das Stanzen bzw. Schneiden der Teigbahnen, das Spreizen und das Drehen der geschnittenen Teigstücke in einer Mehrzahl von aufeinanderfolgenden Schritten, was den Nachteil mit sich bringt, dass durch das Trennen der Vorgänge Stanzen/Schneiden, Spreizen/Drehen ein Versatz bzw. Fluchtfehler der Teigstücke quer zur Laufrichtung der Teigstücke auftritt. Dies führt bei der Weiterbearbeitung der Teigstücke in der Regel zu Problemen, insbesondere wenn aus dreieckigen Teigstücken in einer nachfolgenden Wickelvorrichtung Hörnchen oder Croissants gewickelt werden sollen. Ähnliche Probleme treten bei EP 0 382 105 A1, EP 0 569 103 A1 und EP 2 172 109 A2 auf.

Aus EP 0 882 400 B1 ist es bereits bekannt, zum Entfernen, zum Auseinanderbewegen und zum Ablegen der ausgeschnittenen Teigstücke vollständig oder teilweise die Schneidmittel einzusetzen, die zum Ausschneiden der Teigstückreihe am Bahnende eingesetzt wurden und nach dem Ablegen die Schneidmittel für ein erneutes Ausschneiden zum Bahnende zurückgelegt werden. Bei dem aus diesem Patent bekannten Verfahren müssen die Schneidmittel zum Bahnende zurückverfahren werden, dies bedingt lange Verfahrwege, die das zusätzliche Spreizen der Teigstücke quer zur Laufrichtung erforderlich machen. Außerdem müssen die Werkzeugträger reversiert werden, um bei dreieckigen Teigstückformen während des Zurückfahrens des Werkzeugträgers einen Drehrichtungswechsel ausführen zu können.

Ausgehend von diesem Stand der Technik liegt der Erfindung die Aufgabe zugrunde, eine Vorrichtung zur Erzeugung von Teigstückzuschnitten derart auszubilden, dass bei hoher Genauigkeit betreffend die Produktgröße und die Ablagepositionen der geschnittenen Produkten hohe Taktleistungen gefahren werden können, die Vorrichtung darüber hinaus einen geringen Platzbedarf aufweist, ein übersichtlicher Steuerungsaufwand der beteiligten Elemente vorliegt, die Herstellungskosten relativ niedrig ansetzbar sind und bei einem Produktwechsel nur kurze Rüstzeiten erforderlich werden.

Außerdem soll die Vorrichtung eine Möglichkeit zur Korrektur der Schnittgröße der Teigstücke bieten.

Diese Aufgabe wird durch die kennzeichnenden Merkmale des Anspruches 1 gelöst, vorteilhafte Weiterbildungen der Erfindung ergeben sich aus den Unteransprüchen.

Als Kern der Erfindung wird es zunächst angesehen, die Schneidwerkzeuge über Werkzeugträger an einer rotierend angetriebenen Trommel anzuordnen, der eine vertikale Bewegung derart überlagert wird, dass durch den überlagerten Bewegungsablauf der Trommelrotation und der Vertikalbewegung der Trommel ein oder mehrere im Umlauf um die Trommel bewegliche Schneidwerkzeuge parallel zu dem Förderband bewegt werden.

Die so erreichte Parallelbewegung der Schneidwerkzeuge ermöglicht es grundsätzlich, während der Verweilzeit entlang der Förderrichtung der Teigstücke auf diese nach dem Schnitt weiteren Einfluss auszuüben, beispielsweise diese zu spreizen, zu drehen, oder auf sonstige Weise gegenüber dem Förderband zu bewegen oder zu versetzen. Je nachdem, wie die Schneidwerkzeuge mit ihren Werkzeugträgern gegenüber dem Förderband geschwindigkeitsmäßig eingestellt werden, insbesondere gegenüber einem Abfuhrförderband, lassen sich die Teigstücke nach dem Schneidvorgang voneinander beabstanden. Durch eine zusätzlich überlagerte Seitwärtsbewegung der Werkzeugträger oder eine Rotation um eine Vertikalachse ist es möglich, die geschnittenen Teigstücke zu drehen oder auszurichten, damit die Teigstücke für einen nachfolgenden Bearbeitungsvorgang optimal auf einem Abführförderband abgelegt sind.

In vorteilhafter Weiterbildung sind mehrere Schneidwerkzeuge auf ihnen zugeordneten gemeinsamen Werkzeugträgern zugeordnet, die innerhalb der rotierend angetriebenen Trommel derart drehbar angetrieben und gelagert sind, dass die Schneidwerkzeuge zumindest während des Schneidvorganges gegen die wenigstens eine Teigbahn weisen.

Eine derartige Anordnung ermöglicht es, dass die Schneidwerkzeuge während ihrer Parallelführung zum Förderband mit ihren Schneiden genau parallel nach unten gegen das Förderband weisen und somit einen optimalen Eingriff in die zu schneidenden oder bereits geschnittenen Teigbahnen oder Teigstücken aufweisen. Nach Beendigung des Schneidvorganges wird den Schneidwerkzeugen eine Drehbewegung um eine vertikale Achse überlagert, sodass die Schneidwerkzeuge und ggf. mit diesen an einem Werkzeugträger befestigte Eingriffselemente für den Teig eine Drehung der abgeschnittenen Teigelemente um eine Hochachse zu vollziehen. Zur Auslösung dieser Drehbewegung um die Hochachse ist im Bereich des Werkzeugträgers ein Steuerelement vorgesehen, das parallel zur Drehachse der Trommel beweglich verschiebbar gelagert ist und dessen horizontale Steuerbewegung durch eine auf es einwirkende Kurvenbahn erfolgt. Die Kurvenbahn kann seitlich im Bereich der Trommelseitenbereiche angeordnet sein und wirkt auf die Endabschnitte der stangenartig ausgebildeten Steuerelemente ein, an welchen die Werkzeugträger angelenkt sind.

Die Vertikalbewegung der Trommel, die zusammen mit der Rotationsbewegung der Trommel zur Parallelführung der Schneidwerkzeuge entlang des Förderbandes führt, kann besonders vorteilhaft durch wenigstens eine Kulissenbahn gesteuert werden, die vorteilhafter Weise im Seitenbereich der Trommel vorgesehen ist. Damit die Trommel insgesamt eine vertikale Bewegung über dem Förderband ausführen kann, ist die Trommel über Schwenkarme an einer von ihrer Rotationsachse beabstandete Schwenkachse gelagert. Damit kann die Trommel gegenüber dem Förderband, das unter ihr entlangläuft, eine gleichsam "atmende" Bewegung ausführen derart, dass nach dem Eingreifen der Schneidwerkzeuge in die Teigbahnen während der Rotation, d. h. dem Durchlaufen der Schneidwerkzeuge unter der Trommelachse diese derart angehoben wird, dass die Schneidwerkzeuge äquidistant über der Förderbandoberfläche geführt werden. Die Führung kann so präzise durchgeführt werden, dass unmittelbar nach dem eigentlichen Schneidvorgang die Schneidwerkzeuge bzw. die diese tragenden Werkzeugsätze geringfügig angehoben werden, was dazu führt, dass die durch den Schnitt abgetrennten Teigstücke etwas von der Oberfläche des Förderbandes gelöst werden und dadurch leichter auf der Förderbandoberfläche verdreht oder versetzt werden können. Die Werkzeugeinsätze, die die Schneidwerkzeuge tragen, können mit nach unten weisenden nadelartigen Mitnehmern versehen sein, die in die geschnittenen Teigstücke eingreifen und für einen sicheren Versatz oder eine sichere Drehung der Teigstücke sorgen.

Auch die Mitnehmer heben aufgrund Ihrer Haftung im Teig die Teigstücke leicht an, sodass diese von der Förderbandoberfläche abgehoben werden können.

Auf der Trommel können zwei Gruppen von Schneidwerkzeugen angeordnet sein, wobei eine Schneidwerkzeuggruppe nach dem Schneidevorgang eine rechtsdrehende und die andere Schneidwerkzeuggruppe nach dem Schneidevorgang eine linksdrehende Bewegung ausführt, wobei aber angemerkt ist, dass die zwei Gruppen von Schneidwerkzeugen auf einer geradzahligen Anzahl von Werkzeugträgern verteilt sein können. Z.B. ist es somit möglich, auf der Trommel zwei, vier, sechs oder acht Werkzeugträger oder gar eine größere Anzahl von Werkzeugträgern mit jeweils einer Reihe von Schneidwerkzeugen anzuordnen.

Wie bei derartigen Vorrichtungen üblich, kann die Förderbandeinrichtung wenigstens ein Zufuhr und wenigstens ein Abfuhrförderband aufweisen, wobei im Bereich unter der Trommel unter das Zufuhrförderband endet und in das Abfuhrförderband übergeht. Die Geschwindigkeit des Abfuhrförderbandes ist relativ zur Geschwindigkeit des Zufuhrförderbandes einstellbar und in der Regel höher als die des Zufuhrförderbandes, um eine Spreizung der Teigstücke in Abfuhrrichtung zu erreichen.

Auch die Drehgeschwindigkeit der Trommel relativ zur Geschwindigkeit der Förderbänder ist einstellbar, auf diese Weise lässt sich die Größe der geschnittenen Teigstücke beeinflussen.

Die vertikale Bewegung der Trommel kann - wie oben bereits erwähnt - durch Kulissen insbesondere im Seitenbereich der Trommel gesteuert werden, es ist aber auch möglich, die vertikale Bewegung durch einen elektrischen, hydraulischen oder pneumatischen Antrieb erfolgen zu lassen, der die Trommelachse in der gewünschten Weise anhebt oder absenkt.

Die Erfindung betrifft auch ein Verfahren zur Erzeugung von Zuschnitten von insbesondere dreieckigen Teigstücken aus einer oder mehreren Teigbahnen mit den Merkmalen des Anspruchs 13, wobei eine Mehrzahl von Schneidwerkzeugen in Folge einer gegen die Teigbahn gerichteten Bewegung eine Kante der Teigstücke schneidet und wenigstens eine Förderbahndeinrichtung zur Förderung der wenigstens einen Teigbahn vorgesehen ist.

Verfahrensgemäß ist vorgesehen, dass eine erste Gruppe von Schneidwerkzeugen eine erste Kante des Teigstücks schneidet und währen des Eingriffs der Schneidwerkzeuge durch einen überlagerten Bewegungsablauf einer Trommelrotation und einer Vertikalbewegung der Trommel die Schneidwerkzeuge parallel zum Förderband bewegt werden und während dieser Parallelbewegung eine Drehung des von der wenigstens einen Teigbahn abgeschnittenen Teigstücks erfolgt. Während der Drehung können die Teigstücke etwas von der Förderbahn abgehoben sein, die erste Gruppe von Schneidmessern verursacht eine Linksdrehung und eine nachfolgende Gruppe der Schneidmesser eine rechtsdrehende Bewegung der Teigstücke.

Die Erfindung ist anhand von Ausführungsbeispielen in den Zeichnungsfiguren näher erläutert. Diese zeigen:
- Fig. 1: eine schematische Draufsicht auf eine erfindungsgemäße Vorrichtung;
- Fig. 2: eine schematische Seitenansicht der Vorrichtung gem. Fig. 1;

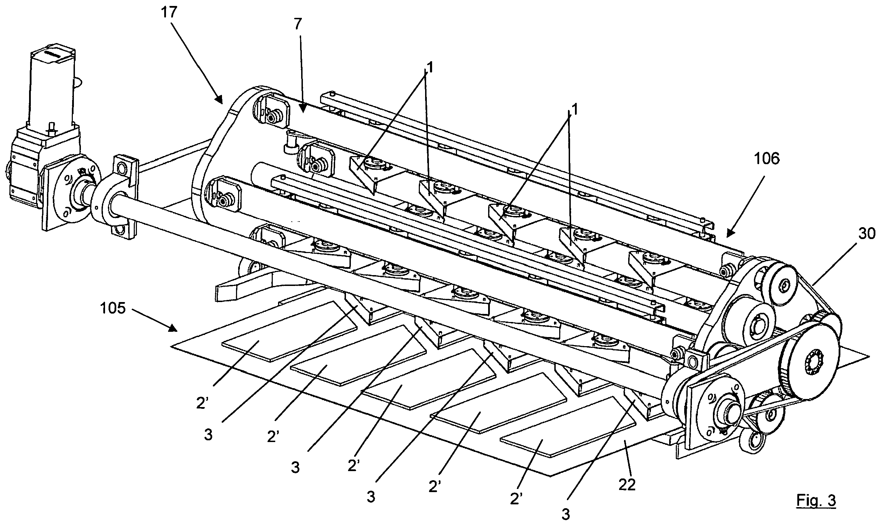

- Fig. 3: eine perspektivische Detailansicht der in der Vorrichtung vorgesehenen Schneidwerkzeugtrommel mit ihren Lageelementen und den darin angeordneten Schneidwerkzeugen;

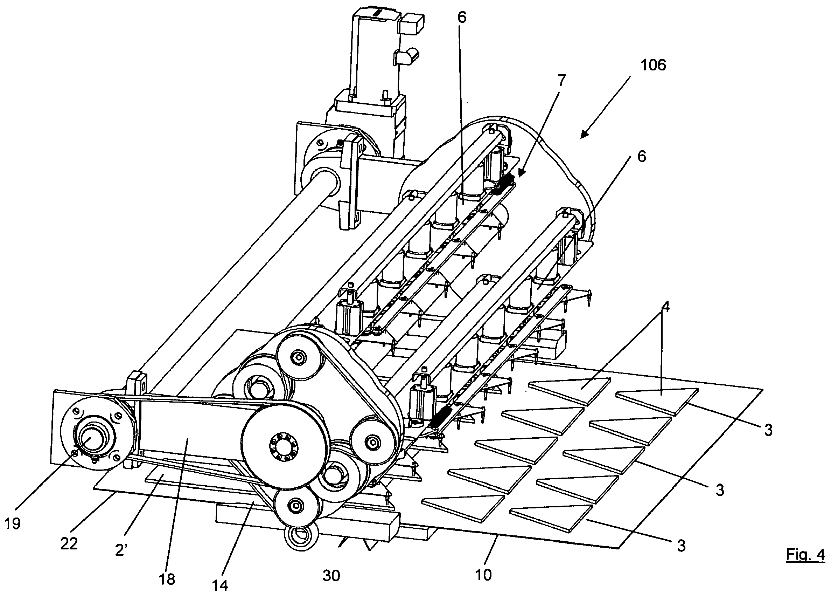

- Fig. 4: eine weitere perspektivische Ansicht der in der Vorrichtung angeordneten Schneidwerkzeugtrommel;

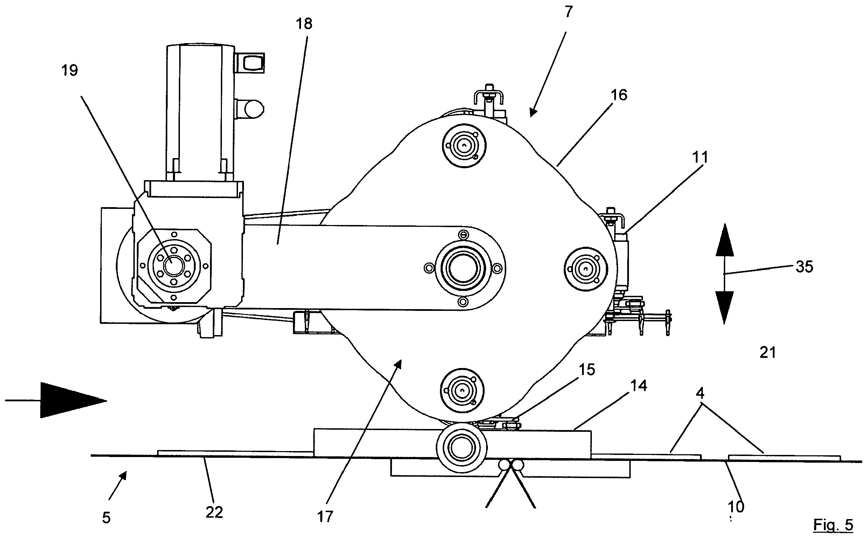

- Fig. 5: eine Seitenansicht der Schneidwerkzeugtrommel;

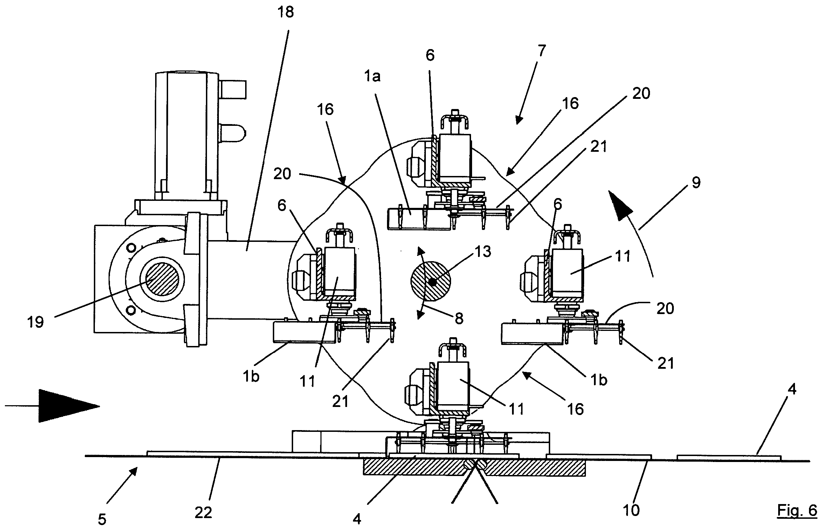

- Fig. 6: einen Schnitt durch die Schneidwerkzeugtrommel und die darunter liegenden Förderbänder rechtwinkelig zur Trommelachse;
- Fig. 7: eine Draufsicht auf die über den Förderbändern angeordnete Trommel;
- Fig. 8: eine schematische Darstellung der im Seitenbereich der Trommel angeordnete Kulissenbahn sowie des durch sie verursachten Hubweges der Trommelachse bezogen auf den Drehwinkel der Schneidwerkzeugtrommel;

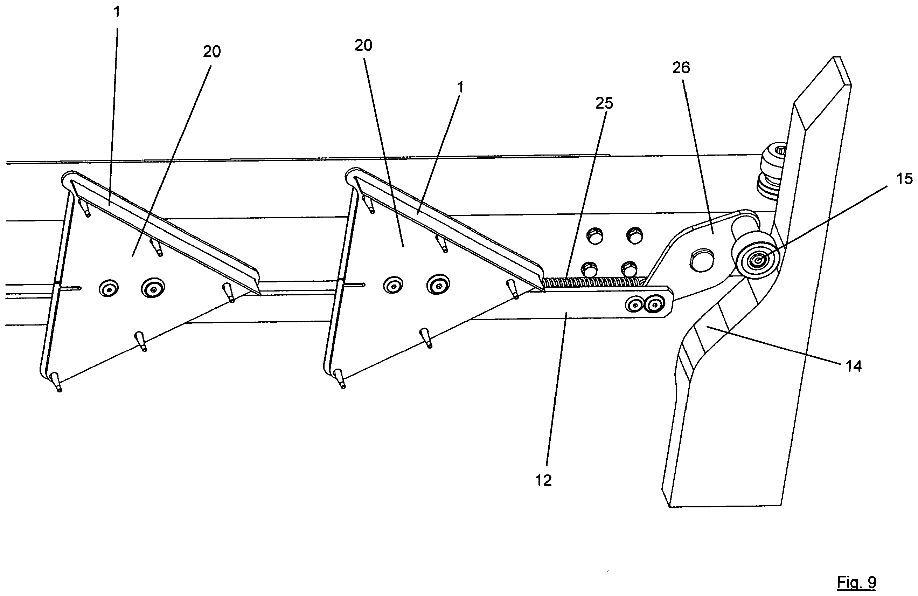

- Fig. 9: eine schematische Darstellung der auf Werkzeugträgern angeordneten Schneidwerkzeuge sowie ihre Anlenkung zur Auslösung einer kulissengesteuerten Drehbewegung um eine vertikale Achse.

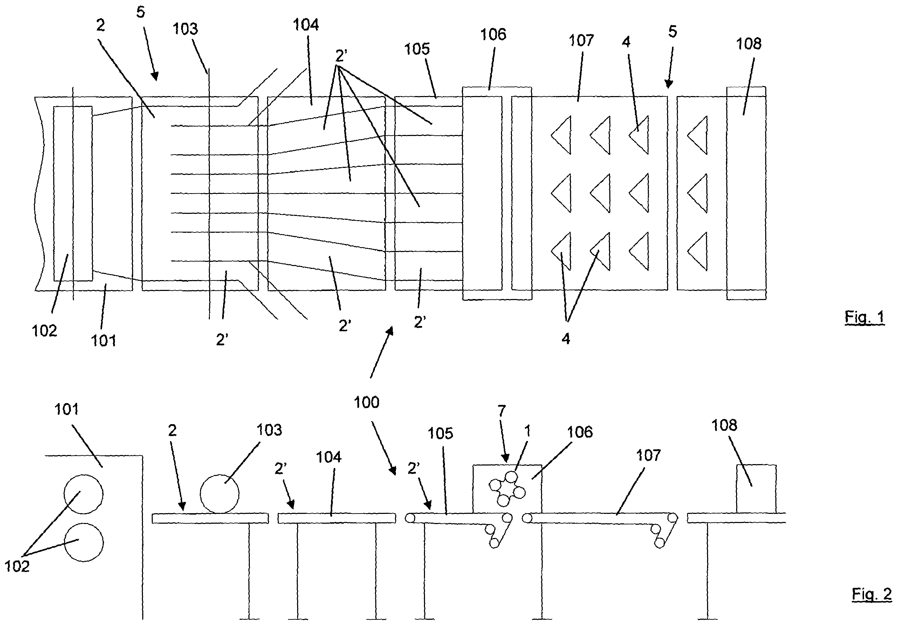

Die in ihrer Gesamtheit nur schematisch in Figur 1 und Figur 2 dargestellte Vorrichtung 100 zur Erzeugung von Zuschnitten von Teigstücken 4 aus wenigstens einer Teigbahn 2, 2' weist eine Mehrzahl von Schneidwerkzeugen 1 auf, die in Folge einer gegen die wenigstens eine Teigbahn 2 gerichtete Bewegung eine Kante 3 der Teigstücke 4 schneiden, wobei die Teigbahn 2 bzw. die Teigstücke 4 auf einer Förderbandeinrichtung 5 gefördert werden.

Die gesamte Vorrichtung 100, weist zudem Teigwalzen 102 zum Auswalzen der Teigbahn 2 und eine Schneidevorrichtung103 auf, um die Teigbahn 2 in nebeneinanderliegende Teigbahnen 2' zu trennen.

Diese nebeneinanderliegenden Teigbahnen 2' werden auf einem sogenannten Spreiztisch 104 in eine seitlich beabstandete Position gebracht und laufen dann über einen Zuführtisch 105 in eine Schneidevorrichtung 106 hinein, in der die Trommel 7 mit den Schneidwerkzeugen 1 untergebracht ist, um die Teigstücke 4 zu schneiden. Diese geschnittenen Teigstücke 4 werden dann über einen Abführtisch 107 zu einer nachgeschalteten Wickelstation 108 verbracht.

Gemäß dem Kern der Erfindung sind die Schneidwerkzeuge 1 über Werkzeugträger 6 an einer rotierend angetriebenen Trommel 7 angeordnet, der eine vertikale Bewegung 8 derart überlagert wird, dass durch den überlagerten Bewegungsablauf der Trommelrotationen 9 und der Vertikalbewegung 8 ein oder mehrere im Umlauf um die Trommel 7 befindliche Schneidwerkzeuge 1 parallel zu den unter der Trommel 7 angeordneten Förderbändern 10 der Förderbandeinrichtung 5 bewegt werden. Die Schneidwerkzeuge 1 sind dazu in vorteilhafter weise auf den ihnen zugeordneten Werkzeugträgern befestigt, die innerhalb der rotierend angetriebenen Trommel 7 derart drehbar angetrieben und gelagert sind, dass die Schneidwerkzeuge 1 zumindest während des Schneidvorganges, d. h. während des Eingriffes in die wenigstens eine Teigbahn 2' nach unten gerichtet sind.

Die Schneidwerkzeuge 1 führen nach Beendigung des eigentlichen Schneidvorganges sowie eines Spreizvorgangs gegenüber dem zulaufenden Teigband eine Drehbewegung um eine vertikale Achse 11 aus, wobei zur Auslösung der Drehbewegung die Schneidwerkzeuge über ein Steuerelement 12 im Bereich des Werkzeugträgers angetrieben werden, das parallel zur Drehachse 13 der Trommel 7 beweglich verschiebbar gelagert ist.

Die horizontale Steuerbewegung des Steuerelementes 12 für die Werkzeugträger 6 erfolgt durch eine auf das Ende des Steuerelementes 12 einwirkende Kurvenbahn 14, die von einem Abtastelement 15 abgetastet wird, das durch einen Hebel mit dem Ende der stangenartigen Steuerelemente 12 verbunden ist.

Die vertikale Auf- und Abbewegung der Trommel 7 wird beim Ausführungsbeispiel durch Kurvenbahnen 16 gesteuert, die in den Seitenbereichen 17 der Trommel 7 angeordnet sind und gleichsam die Seitenwandungen der Trommel 7 bilden können. Damit die Trommel 7 nach oben und unten bewegt werden kann, ist die Trommel 7 über Schwenkarme 18 an einer von ihrer Drehachse 13 beabstandete Schwenkachse 19 gelagert.

Auf der Trommel 7 sind zwei Gruppen von Schneidwerkzeugen 1 angeordnet, eine erste Schneidwerkzeugruppe 1 1a führt nach dem Schneidvorgang eine rechtsdrehende und eine zweite Schneidwerkzeuggruppe 2 1b nach dem Schneidvorgang eine linksdrehende Bewegung aus. Diese alternativen Drehungen nach rechts und nach links führen dazu, dass beim Ausführungsbeispiel dreieckige Teigstücke nach dem Schnitt ihrer Kanten alle so ausgerichtet werden, dass sie einerseits mit einer Dreiecksbasis in Abführrichtung zeigen und andererseits in mehreren Reihen - abhängig von der Anzahl der Schneidwerkzeuge pro Werkzeugträger hintereinander auf dem Förderband ausgerichtet sind und so in Reihe abtransportiert werden können.

Die Schneidwerkzeuge 1 sind auf Werkzeugeinsätzen 20 angeordnet, die mit nach unten weisenden Teigeingriffsvorsprüngen 21 versehen sind, um eine sichere Drehung der abgeschnittenen Teigstücke 4 zu gewährleisten.

In üblicher Weise weist die Förderbandeinrichtung 5 wenigstens ein Zufuhrförderband 22 und wenigstens das bereits erwähnte Abfuhrförderband 10 auf, wobei er im Bereich unter der Trommel 7 das Zufuhrförderband 22 endet und in das Abfuhrförderband 10 übergeht, dessen Geschwindigkeit relativ zur Geschwindigkeit des Zufuhrförderbandes 22 eingestellt werden kann. Die Drehgeschwindigkeit der Trommel 7 ist ihrerseits relativ zur Geschwindigkeit des Abfuhrförderbandes 10 und Zufuhrförderbandes 22 einstellbar.

Die geschnittenen Teigstücke 4 werden durch die Teigeingriffsvorsprünge 21 und durch die Schneidwerkzeuge 1 gegenüber der Oberfläche des Zufuhr- und Abfuhrförderbandes 22, 10 gedreht und von der jeweiligen Oberfläche des Förderbandes Zufuhr- oder Abfuhrförderbandes 22, 10 abgehoben.

Bei dem Verfahren, dass durch eine derartige Vorrichtung durchgeführt werden kann, schneidet eine erste Gruppe von Schneidwerkzeugen 1a eine erste Kante des Teigstückes 4 und eine zweite, nachfolgende Gruppe von Schneidwerkzeugen 1b eine zweite Kante des Teigstückes 4. Während des Eingriffes der Schneidwerkzeuge 1 wird durch den überlagerten Bewegungsablauf der Trommelrotation und der Vertikalbewegung der Trommel 7 eine Parallelbewegung der Schneidwerkzeuge 1 relativ zum Förderband 10, 22 erreicht, während dieser Parallelbewegung erfolgt zudem eine Drehung des von der wenigstens einen Teigbahn abgeschnittenen Teilstückes 4, um eine vertikale Achse derart, dass die Teigstücke, wie in Figur 2 besonders deutlich sichtbar, mit einer Dreiecksbasis in Förderrichtung 24 abgeführt werden.

Die Drehung der Werkzeugträger 6 innerhalb der Trommel 7 wird durch Riemenantriebe 30 erreicht, die in einem Seitenbereich der Trommel 7 angeordnet sind und dafür sorgen, dass die Schneidmesser während der Trommelrotation nach unten gerichtet sind.

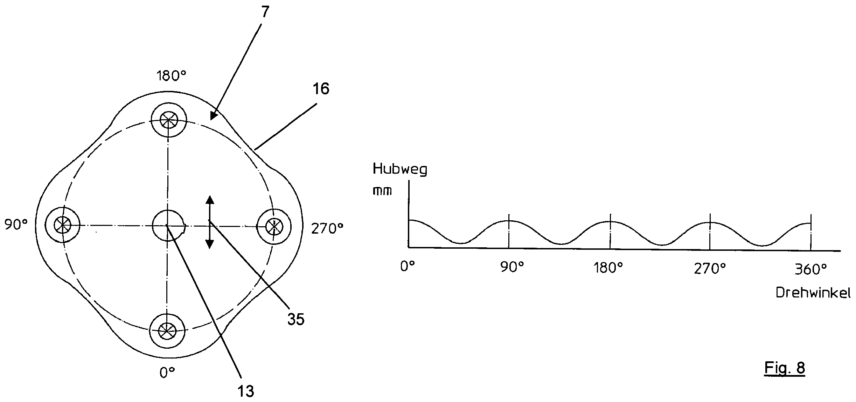

In Figur 8 ist noch einmal dargestellt, wie durch die Kurvenbahnen 16 im Seitenbereich der Trommel 7 die Auf- und Abbewegung 35 der Drehachse 13 gesteuert wird. Die überlagerte Rotation der Trommel 7 und ihre Auf- und Abbewegung 35 führt dazu, dass die Schneidmesser während ihres Eingriffes in den Teig im wesentlichen horizontal geführt werden, wodurch eine sichere Drehung und Ausrichtung der Teigstücke erfolgen kann.

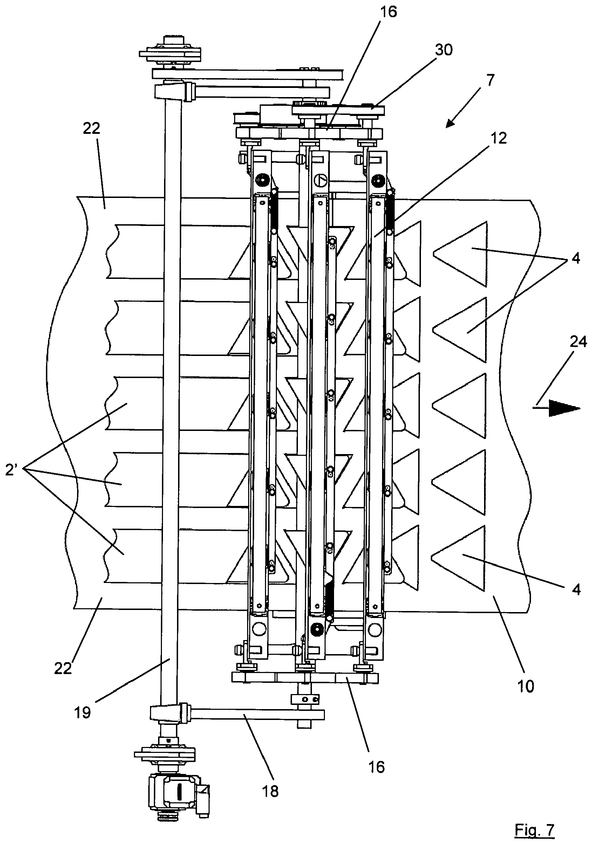

In Figur 7 ist deutlich zu sehen, wie die Werkzeugeinsätze 20 an den Werkzeugträgern befestigt sind und über das Steuerelement 12 verdreht werden können. Das Steuerelement 12 ist unter Vorspannung einer Feder 25 über ein Zwischenelement 26 mit einem Abtastelement 15 verbunden, das auf der Kurvenbahn 14 abrollt und damit eine kollektive Verdrehung der Werkzeugeinsätze 20 um die vertikalen Achsen vollzieht.

### BEZUGSZEICHENLISTE

- 1: Schneidwerkzeug
- 1a: Schneidwerkzeuggruppe 1
- 1b: Schneidwerkzeuggruppe 2
- 2, 2': Teigbahn
- 3: Kante
- 4: Teigstück
- 5: Förderbandeinrichtung
- 6: Werkzeugträger
- 7: Trommel
- 8: Bewegung (vertikal)
- 9: Trommelrotation
- 10: Abfuhrförderband
- 11: Vertikalachse
- 12: Steuerelement
- 13: Drehachse v. 7
- 14: Kurvenbahn
- 15: Abtastelement
- 16: Kulissenbahn
- 17: Seitenbereich
- 18: Schwenkarme
- 19: Schwenkachse v. 7
- 20: Werkzeugeinsatz
- 21: Teigeingriffsvorsprünge
- 22: Zufuhrförderband
- 24: Förderrichtung
- 30: Riemenantrieb
- 35: Auf- und Abbewegung
- 100: Vorrichtung

- 102: Teigwalzen
- 103: Schneidevorrichtung
- 104: Spreiztisch
- 105: Zuführtisch
- 106: Schneidevorrichtung
- 107: Abführtisch
- 108: Wickelstation

## Patentansprüche

1. Vorrichtung (100) zur Erzeugung von Zuschnitten von insbesondere dreieckigen Teigstücken (4) aus wenigstens einer Teigbahn (2) mit
einer Mehrzahl von Schneidwerkzeugen (1), die in Folge einer gegen die wenigstens eine Teigbahn (2') gerichteten Bewegung eine Kante (3) der Teigstücke (4) schneiden, und
einer Förderbandeinrichtung (5), auf der die wenigstens eine Teigbahn (2) gefördert wird, **dadurch gekennzeichnet, dass** die Schneidwerkzeuge (1) über Werkzeugträger (6) an einer rotierend angetriebenen Trommel (7) der Vorrichtung (100) angeordnet sind, der eine vertikale Bewegung (8) derart überlagerbar ist, dass durch den überlagerten Bewegungsablauf der Trommelrotation (9) und der Vertikalbewegung der Trommel (7) ein oder mehrere im Umlauf um die Trommel (7) befindliche Schneidwerkzeuge (1) parallel zu der Förderbandeinrichtung (5) bewegbar sind.

2. Vorrichtung nach Anspruch 1, **dadurch gekennzeichnet, dass** mehrere Schneidwerkzeuge (1) auf den ihnen zugeordneten Werkzeugträgern (6) befestigt sind, die innerhalb der rotierend angetriebenen Trommel (7) derart drehbar angetrieben und gelagert sind, dass die Schneidwerkzeuge (1) zumindest während des Schneidvorganges gegen die wenigstens eine Teigbahn (2) weisen.

3. Vorrichtung nach Anspruch 1 oder 2, **dadurch gekennzeichnet, dass** die Schneidwerkzeuge (1) nach Beendigung des Schneidvorganges eine Drehbewegung um eine vertikale Achse (11) ausführen.

4. Vorrichtung nach Anspruch 3, **dadurch gekennzeichnet, dass** zur Auslösung der Drehbewegung der vertikal drehbar angelenkten Schneidwerkzeuge (1) ein Steuerelement (12) im Bereich des Werkzeugträgers (6) parallel zur Drehachse der Trommel (7) beweglich verschiebbar gelagert ist.

5. Vorrichtung nach einem der Ansprüche 1 - 4, **dadurch gekennzeichnet, dass** die horizontale Steuerbewegung des Steuerelementes (12) des Werkzeugträgers (6) durch eine auf es einwirkende Kurvenbahn (14) erfolgt.

6. Vorrichtung nach einem der vorhergehenden Ansprüche, **dadurch gekennzeichnet, dass** die vertikale Bewegung der Trommel (7) durch wenigstens eine Kulissenbahn (16) steuerbar ist.

7. Vorrichtung nach einem der vorhergehenden Ansprüche, **dadurch gekennzeichnet, dass** die Trommel (7) zur vertikalen Bewegung über Schwenkarme (18) an einer von ihrer Drehachse (13) beabstandete Schwenkachse (19) gelagert ist.

8. Vorrichtung nach einem der vorhergehenden Ansprüche, **dadurch gekennzeichnet, dass** auf der Trommel (7) zwei Gruppen von Schneidwerkzeugen (1) angeordnet sind, wobei eine Schneidwerkzeuggruppe (1a) nach dem Schneidvorgang um eine i. w. senkrechte Achse eine rechtsdrehende und die andere Schneidwerkzeuggruppe (1b) nach dem Schneidvorgang und eine i. w. senkrechte Achse eine linksdrehende Bewegung ausführt.

9. Vorrichtung nach einem der vorhergehenden Ansprüche, **dadurch gekennzeichnet, dass** die Schneidwerkzeuge (1) auf Werkzeugeinsätzen (20) angeordnet sind, die mit nach unten weisenden Teigeingriffsvorsprüngen (21) versehen sind.

10. Vorrichtung nach einem der vorhergehenden Ansprüche, **dadurch gekennzeichnet, dass** die Förderbandeinrichtung (5) wenigstens ein Zufuhr (22)- und wenigstens ein Abfuhrförderband (10) aufweist, wobei im Bereich unter der Trommel (7) das Zuführförderband (22) endet und in das Abführförderband (10) übergeht, dessen Geschwindigkeit relativ zur Geschwindigkeit des Zuführförderbandes (22) einstellbar ist.

11. Vorrichtung nach einem der vorhergehenden Ansprüche, **dadurch gekennzeichnet, dass** die Drehgeschwindigkeit der Trommel (7) relativ zur Geschwindigkeit der Förderbänder (10, 22) steuerbar ist.

12. Vorrichtung nach einem der vorhergehenden Ansprüche, **dadurch gekennzeichnet, dass** die geschnittenen Teigstücke (4) durch die Teigeingriffsvorsprünge (21) gegenüber der Oberfläche des Förderbandes (22, 10) drehbar und/oder von der Oberfläche des Förderbandes abhebbar sind.

13. Verfahren zur Erzeugung von Zuschnitten von insbesondere dreieckigen Teigstücken (4) aus einer oder mehreren Teigbahnen (2, 2'), mit folgenden Merkmalen:
- Vorsehen einer Mehrzahl von Schneidwerkzeugen (1), die in Folge einer gegen die Teigbahn (2') gerichteten Bewegung eine Kante der Teigstücke (4) schneiden;
- Vorsehen wenigstens einer Förderbandeinrichtung (5) zur Förderung der wenigstens einen Teigbahn (2, 2'), **dadurch gekennzeichnet, dass** eine erste Gruppe von Schneidwerkzeugen (1a) eine erste Kante (3) des Teigstückes (4) schneidet, wobei während des Eingriffes der Schneidwerkzeuge (1) durch einen überlagerten Bewegungsablauf einer Trommelrotation (9) und einer Vertikalbewegung (8) der Trommel (7) die Schneidwerkzeuge (1) parallel zum Förderband (10, 22) bewegt werden und während dieser Parallelbewegung eine Drehung der von der wenigstens einen Teigbahn abgeschnittenen Teigstücke (4) erfolgt.

14. Verfahren nach Anspruch 13, **dadurch gekennzeichnet, dass** während der Drehung die Teigstücke (4) von der Förderbahn abgehoben sind.

15. Verfahren nach einem der Ansprüche 13 und 14, **dadurch gekennzeichnet, dass** in Verbindung mit einer ersten Gruppe von Schneidwerkzeugen (1a) eine Linksdrehung der Teigstücke (4) und in Verbindung mit einer nachfolgenden Gruppe von Schneidwerkzeugen (1b) eine Rechtsdrehung der Teigstücke (4) erfolgt.

## Claims

1. A device (100) for creating blanks of in particular triangular pieces of dough (4) from at least one sheet of dough (2), comprising
a plurality of cutting tools (1) which, as a result of a movement directed against the at least one sheet of dough (2'), cut an edge (3) of the pieces of dough (4), and a conveyor belt device (5) on which the at least one sheet of dough (2) is conveyed, **characterized in that** the cutting tools (1) are arranged via tool carriers (6) on a drum (7) of the device (100) which is driven in a rotating manner and on which a vertical movement (8) is superimposable in such a manner that, by means of the superimposed sequence of movement of the drum rotation (9) and the vertical movement of the drum (7), one or more cutting tools (1) which are in circulation around the drum (7) are movable parallel to the conveyor belt device (5).

2. The device as claimed in claim 1, **characterized in that** a plurality of cutting tools (1) are fastened on the tool carriers (6) which are assigned thereto and are driven rotatably, and mounted, within the drum (7), which is driven in a rotating manner, in such a manner that the cutting tools (1) face toward the at least one sheet of dough (2) at least during the cutting operation.

3. The device as claimed in claim 1 or 2, **characterized in that**, after completion of the cutting operation, the cutting tools (1) execute a rotational movement about a vertical axis (11).

4. The device as claimed in claim 3, **characterized in that**, in order to trigger the rotational movement of the cutting tools (1) which are coupled in a vertically rotatable manner, a control element (12) is mounted in the region of the tool carrier (6) so as to be movably displaceable parallel to the axis of rotation of the drum (7).

5. The device as claimed in any of claims 1 to 4, **characterized in that** the horizontal control movement of the control element (12) of the tool carrier (6) takes place by means of a curved track (14) acting on said control element.

6. The device as claimed in any of the preceding claims, **characterized in that** the vertical movement of the drum (7) is controllable by means of at least one slotted guide track (16).

7. The device as claimed in any of the preceding claims, **characterized in that**, for the vertical movement, the drum (7) is mounted via pivot arms (18) on a pivot spindle (19) which is spaced apart from the axis of rotation (13) of said drum.

8. The device as claimed in any of the preceding claims, **characterized in that** two groups of cutting tools (1) are arranged on the drum (7), wherein one group of cutting tools (1a) executes a right-rotating movement about a substantially vertical axis after the cutting operation and the other group of cutting tools (1b) executes a left-rotating movement about a substantially vertical axis after the cutting operation.

9. The device as claimed in any of the preceding claims, **characterized in that** the cutting tools (1) are arranged on tool inserts (20) which are provided with downwardly pointing dough engagement projections (21).

10. The device as claimed in any of the preceding claims, **characterized in that** the conveyor belt device (5) has at least one supply conveyor belt (22) and at least one removal conveyor belt (10), wherein the supply conveyor belt (22) ends in the region below the drum (7) and merges into the removal conveyor belt (10), the speed of which is adjustable relative to the speed of the supply conveyor belt (22).

11. The device as claimed in any of the preceding claims, **characterized in that** the rotational speed of the drum (7) relative to the speed of the conveyor belts (10, 22) is controllable.

12. The device as claimed in any of the preceding claims, **characterized in that** the cut pieces of dough (4) are rotatable in relation to the surface of the conveyor belt (22, 10) and/or are liftable from the surface of the conveyor belt by means of the dough engagement projections (21).

13. A method for creating blanks of in particular triangular pieces of dough (4) from one or more sheets of dough (2, 2'), comprising the following features: providing a plurality of cutting tools (1) which, as a result of a movement directed against the sheet of dough (2'), cut an edge of the pieces of dough (4); providing at least one conveyor belt device (5) for conveying the at least one sheet of dough (2, 2'), **characterized in that** a first group of cutting tools (1a) cuts a first edge (3) of the piece of dough (4), wherein, during the engagement of the cutting tools (1), the cutting tools (1) are moved parallel to the conveyor belt (10, 22) by means of a superimposed sequence of movement of a drum rotation (9) and a vertical movement (8) of the drum (7), and a rotation of the pieces of dough (4) cut off from the at least one sheet of dough takes place during said parallel movement.

14. The method as claimed in claim 13, **characterized in that**, during the rotation, the pieces of dough (4) are lifted from the conveyor track.

15. The method as claimed in claim 13 or 14, **characterized in that** a left rotation of the pieces of dough (4) takes place in conjunction with a first group of cutting tools (1a) and a right rotation of the pieces of dough (4) takes place in conjunction with a subsequent group of cutting tools (1b).

## Revendications

1. Dispositif (100) de fabrication de découpes, en particulier de morceaux de pâte triangulaires (4) à partir d'au moins une bande de pâte (2) avec une pluralité d'outils de coupe (1) qui coupent un bord (3) des morceaux de pâte (4) à la suite d'un mouvement dirigé vers ladite au moins une bande de pâte (2'), et
un dispositif à bande transporteuse (5) sur lequel est transportée ladite au moins une bande de pâte (2), **caractérisé en ce que** les outils de coupe (1) sont disposés par l'intermédiaire de porte-outils (6) sur un tambour (7) entraîné en rotation du dispositif (100), sur lequel un mouvement vertical (8) peut être superposé de telle sorte que, par suite de la superposition de la séquence de mouvement de la rotation du tambour (9) et du mouvement vertical du tambour (7), un ou plusieurs outils de coupe (1) tournant autour du tambour (7) peuvent être déplacés parallèlement au dispositif à bande transporteuse (5).

2. Dispositif selon la revendication 1, **caractérisé en ce que** plusieurs outils de coupe (1) sont montés sur les porte-outils (6) qui leur sont associés, qui sont entraînés en rotation et qui sont montés à l'intérieur du tambour (7) entraîné en rotation de telle sorte que les outils de coupe (1) sont dirigés vers ladite au moins une bande de pâte (2) au moins pendant le processus de coupe.

3. Dispositif selon les revendications 1 ou 2, **caractérisé en ce que** les outils de coupe (1) effectuent un mouvement de rotation autour d'un axe vertical (11) après que le processus de coupe est terminé.

4. Dispositif selon la revendication 3, **caractérisé en ce que,** pour déclencher le mouvement de rotation des outils de coupe (1) articulés en rotation verticale, un élément de commande (12) est monté dans la zone du porte-outil (6) de manière à pouvoir être déplacé parallèlement à l'axe de rotation du tambour (7).

5. Dispositif selon l'une des revendications 1 à 4, **caractérisé en ce que** le mouvement de commande horizontal de l'élément de commande (12) du porte-outil (6) est effectué par une piste de came (14) agissant sur celui-ci.

6. Dispositif selon l'une des revendications précédentes, **caractérisé en ce que** le mouvement vertical du tambour (7) est contrôlable par au moins une glissière (16).

7. Dispositif selon l'une des revendications précédentes, **caractérisé en ce que** le tambour (7) est monté pour un mouvement vertical via des bras pivotants (18) sur un axe de pivotement (19) espacé de son axe de rotation (13).

8. Dispositif selon l'une des revendications précédentes, **caractérisé en ce que** deux groupes d'outils de coupe (1) sont disposés sur le tambour (7), un groupe d'outils de coupe (1a) effectuant une rotation dans le sens des aiguilles d'une montre après l'opération de coupe autour d'un axe sensiblement vertical et l'autre groupe d'outils de coupe (1b) effectuant une rotation dans le sens inverse des aiguilles d'une montre après l'opération de coupe et un axe sensiblement vertical.

9. Dispositif selon l'une des revendications précédentes, **caractérisé en ce que** les outils de coupe (1) sont disposés sur des inserts d'outil (20) munis de saillies (21) d'engagement de pâte orientées vers le bas.

10. Dispositif selon l'une des revendications précédentes, **caractérisé en ce que** le dispositif à bande transporteuse (5) présente au moins une bande transporteuse d'alimentation (22) et au moins une bande transporteuse d'évacuation (10), la bande transporteuse d'alimentation (22) se terminant dans la zone située sous le tambour (7) et se transformant en la bande transporteuse d'évacuation (10), dont la vitesse est réglable par rapport à la vitesse de la bande transporteuse d'alimentation (22).

11. Dispositif selon l'une des revendications précédentes, **caractérisé en ce que** la vitesse de rotation du tambour (7) est contrôlable par rapport à la vitesse des bandes transporteuses (10, 22).

12. Dispositif selon l'une des revendications précédentes, **caractérisé en ce que** les découpes de pâte (4) peuvent tourner et/ou être soulevés de la surface de la bande transporteuse (22, 10) par les saillies d'engagement de la pâte (21) par rapport à la surface de la bande transporteuse (22, 10).

13. Procédé de fabrication de découpes, en particulier de morceaux de pâte triangulaires (4), à partir d'une ou de plusieurs bandes de pâte (2, 2'), présentant les caractéristiques suivantes:
Mise à disposition d'une pluralité d'outils de coupe (1) qui coupent un bord des morceaux de pâte (4) à la suite d'un mouvement dirigé vers la bande de pâte (2');
Mise à disposition d'au moins un dispositif à bande transporteuse (5) pour le transport d'au moins une bande de pâte (2, 2'), **caractérisée en ce qu'un** premier groupe d'outils de coupe (1a) coupe un premier bord (3) du morceau de pâte (4), dans lequel, pendant l'engagement des outils de coupe (1), les outils de coupe (1) sont déplacés parallèlement à la bande transporteuse (10, 22) par une séquence superposée de mouvements d'une rotation du tambour (9) et d'un mouvement vertical (8) du tambour (7) et, pendant ce mouvement parallèle, une rotation des morceaux de pâte (4) coupés de ladite au moins une trajectoire de pâte se produit.

14. Procédé selon la revendication 13, **caractérisé en ce que,** pendant la rotation, les morceaux de pâte (4) sont soulevés de la piste du convoyeur.

15. Procédé selon l'une des revendications 13 et 14, **caractérisé en ce que, en** liaison avec un premier groupe d'outils de coupe (1a), une rotation à gauche des morceaux de pâte (4) et en liaison avec un groupe suivant d'outils de coupe (1b), une rotation à droite des morceaux de pâte (4) a lieu.
